# EUROPEAN PATENT SPECIFICATION

(11) **EP 2 280 033 B1**
(45) Date of publication and mention of the grant of the patent: **12.03.2014**
(21) Application number: 08874420.6
(22) Date of filing: 24.12.2008
(51) Int. Cl.: C08F 4/80, C07F 15/00, B01J 23/46, B01J 31/18, C08F 32/00, C08G 61/08, C08K 5/56

(54) **DICYCLOPENTADIENE METATHESIS POLYMERISATION CATALYST**
DICYCLOPENTADIENMETATHESEPOLYMERISATIONSKATALYSATOR
CATALYSEUR DE POLYMÉRISATION À MÉTATHÈSE DE DICYCLOPENTADIÈNE

(30) Priority: 22.05.2008 RU 2008120013; 31.07.2008 RU 2008131456; 10.12.2008 RU 2008148502
(43) Date of publication of application: 02.02.2011
(73) Proprietor: Limited Liability Company "United Research and Development Centre", Moscow 119333 (RU)
(72) Inventor: AFANASIEV, Vladimir Vladimirovich, Moskovskaya obl. 142290 (RU); DOLGINA, Tatyana Modestovna, Respublika Komi 167023 (RU); BESPALOVA, Natalya Borisovna, 119333 Moscow (RU)
(74) Representative: Rasch, Teija Kaarina
(86) International application number: PCT/RU2008/000794
(87) International publication number: WO 2009/142535

(56) References cited:
- EP-A1- 1 757 613
- RU-C2- 2 168 518
- US-A- 5 969 170
- US-A- 6 111 121
- US-A1- 2005 261 451

## Description

### Field of invention

This invention relates catalysis and concerns production of catalyst for dicyclopentadiene (DCPD) metathesis polymerization.

### Prior knowledge

There is a series of catalysts known for metathesis polymerization with controlled catalytic activity, published by Grubbs and patented by California Institute of Technology [UNG THAY; SCHRODI YANN, US2005261451 2005-11-24; A. Hejl, M.W. Day, R.H. Grubbs Organometallics 2006, 25, 6149-6154, T. Ung, A. Hejl, R.H. Grubbs, Y. Schrodi Organometallics 2004, 23, 5399-5401].

Catalysts are applied for polymers production from cycloolefins and bi-cycloolefins via reaction of metathesis polymerization with the ring opening of monomer : catalyst mole ratio in the range of 30000:1 to 40000:1 .

Fast initiation of well-defined catalysts makes their application for DCPD polymerization difficult as particles of the catalyst are covered with the formed polymer and microcapsules form to prevent catalyst dissolving in the monomer. This results in high consumption of the catalysts and, as a consequence, high cost of polydicyclopentadiene production.

Pre-dissolving of the catalyst in inert solvent impairs quality of the polymer - polydicyclopentadiene (PDCPD).

Known method of preparing catalysts for dicyclopentadiene metathesis polymerization (US2005261451 2005-11-24) consists of treating second generation Grubbs catalyst or its derivatives with appropriate styrene in methylene chloride at 40°C.

Disadvantage of the method under patent US2005261451 is low yield of the target product, 50 to 65 % in terms of the first-generation catalyst, resulting from multistage synthesis and imperfection of the method.

Above patent also covers method of dicyclopentadiene metathesis polymerization at monomer : catalyst ratio of not higher than 40000:1

### Disclosure of the invention

Task resolved in the claimed invention consists in creating as new efficient catalysts for dicyclopentadiene metathesis polymerization allowing reduction of the catalyst consumption through improved solubility in the monomer, method of preparation ensuring higher yield of the catalyst, as well as method of dicyclopentadiene polymerization.

In compliance with the task set the authors created a catalyst for dicyclopentadiene metathesis polymerization with the following formula: 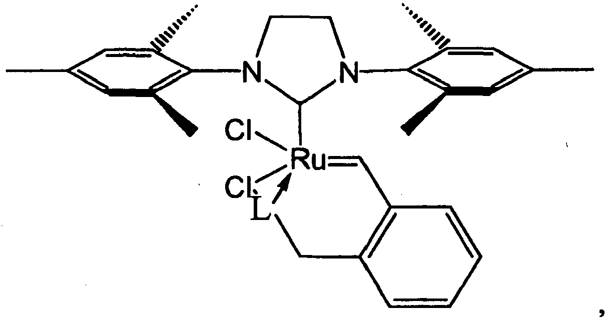 where L is a substituent selected from the group:

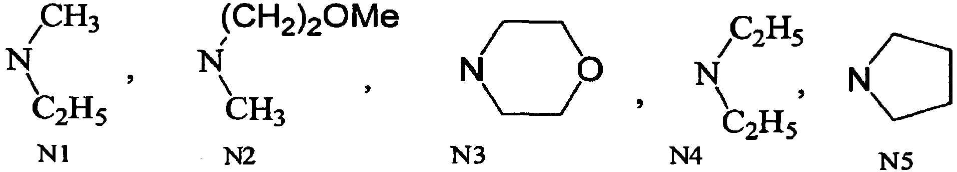

Catalysts claimed surpass the catalysts disclosed in patent [US2005261451] and allow preparing polydicyclopentadiene with high application properties at monomer : catalyst mole ratio 70000:1 to 200000:1, whereas for the known catalysts this ratio is 30000: 1 and 40000:1. (US2005261451 2005-11-24)

In compliance with the task set the authors developed methods of the claimed catalysts preparation.

To prepare catalyst with the formula 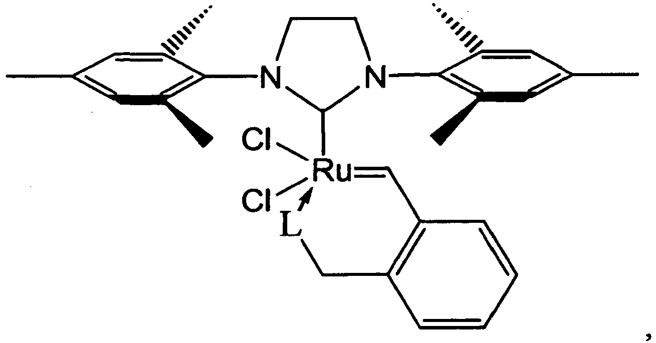 where L is a substituent selected from the group:

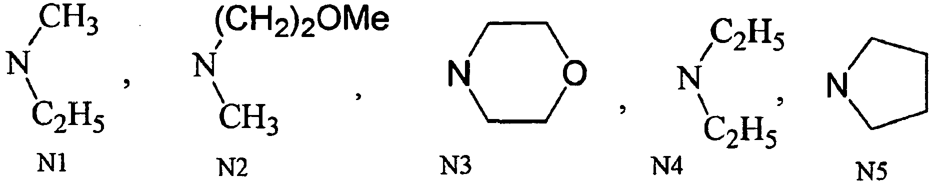

Second generation Grubbs catalyst (**GII**) is subject to interaction with N,N-di-alkyl-(2-vinyl-benzyl)amine or 1-(2-vinyl-benzyl)pyrrolidine or 4-(2-vinyl-benzyl)morpholine in inert atmosphere at temperatures of 60-85 °C in the presence of a solvent, with di-alkyl- being methylethyl- or diethyl or methyl(2- methoxyethyl).

To prepare catalyst with the formula 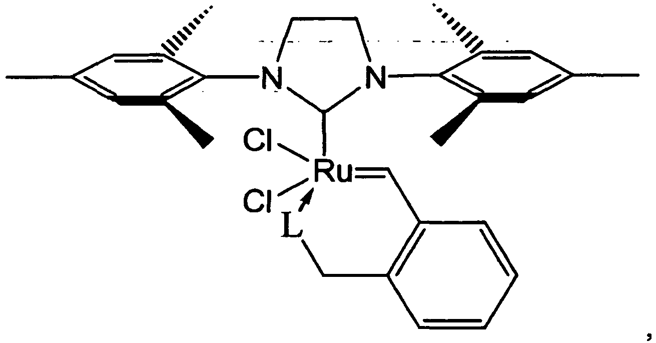 where L is a substituent selected from the group:

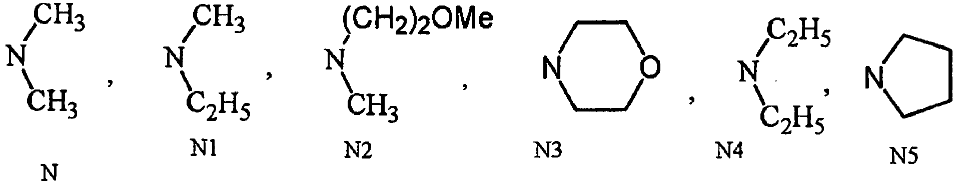

RuCl₂(PPh₃)₃ is subject to interaction with 1,1-diphenyl-2-propyne-1-ol in tetrahydrofuran at the temperature of the solvent boiling in inert atmosphere, and then with tricyclohexylphosphine at room temperature in inert atmosphere; indenilydene complex of ruthenium is isolated and then in one reactor it is step by step subject to interaction with 1,3-bis-(2,4,6-trimethylphenyl)-2-tri-chloro-methyl-imidazolidine and 2-(N,N-dialkyl-aminomethyl)styrene or 1-(2-vinyl-benzyl)pyrrolidine or 4-(2- vinyl-benzyl)morpholine in toluene with heating at 60-70°C in inert atmosphere, with dialkyl being dimethyl, diethyl- or methylethyl- or methyl(2-metoxyethyl)-.

This method consists of two parts. Instead of Grubbs II catalysts iindenylidene complex **In(1.2)** is applied, produced with the improved method.

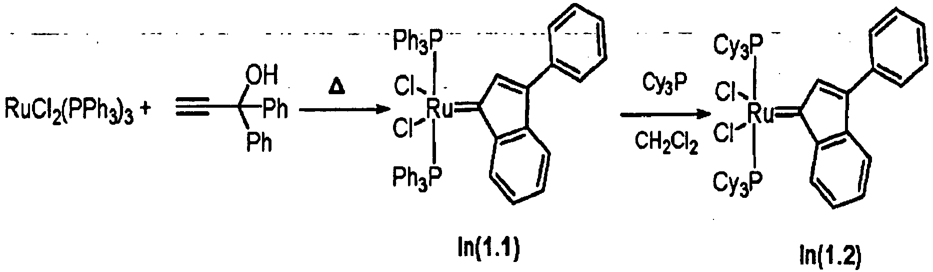

First part (synthesis of precursor) consists of two stages carrier out without intermediate products isolation - synthesis of indenylidene triphenylphosphine carbene complex of ruthenium by treating with RuCl₂(PPh₃)₃ with 1,1-diphenyl-2-propyn-1-ol and preparation of tri-cyclohexyl-phosphine complex. Second part includes indenylidene complex treatment with N-heterocyclic carbene precursor: [1,3-Bis(2,4,6-trimethylphenyl)-2-(trichloromethyl)imidazolidine - CSIMes(H)(CCl₃),] and relevant aminostyrene with the target project formation. Instead of Grubbs catalyst of the first generation, this method uses indenylidene complex (**In1.2**), prepared by improved technique. Yield of the target products, as per publications, is 75-90%. 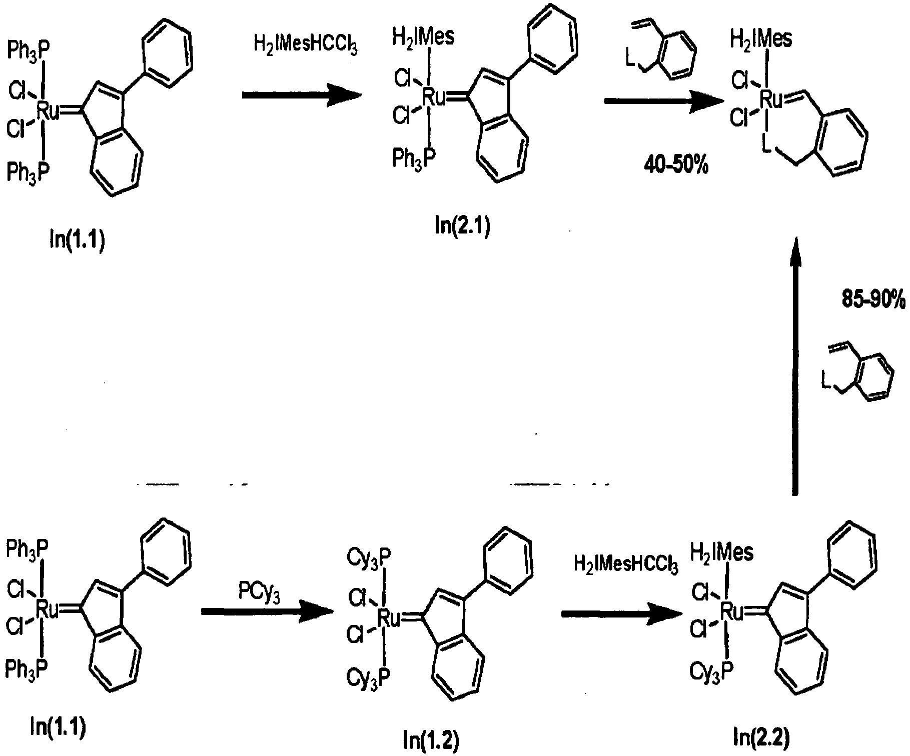 where L is a substituent selected from the group:

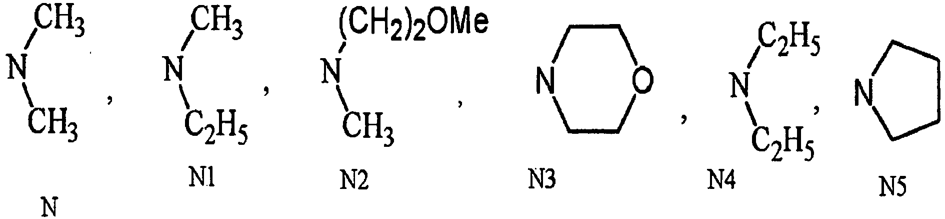

Method of dicyclopentadiene metathesis polymerization consists of carrying out polymerization with the catalyst claimed at the substrate to catalyst mole ratio of 70000:1 to 200000:1. Metathesis polymerization with this catalyst allows reduction of the catalyst consumption through its increased solubility in the monomer as the catalyst possesses good solubility ion the monomer at 35°C.

### Best Implementation Case of the Invention

Catalyst is prepared by the second generation Grubbs catalyst (**G II**) interaction with the relevant amine derivative - 2-vinylbenzylamine in inert atmosphere at the temperature of 60-85 °C in the presence of a solvent

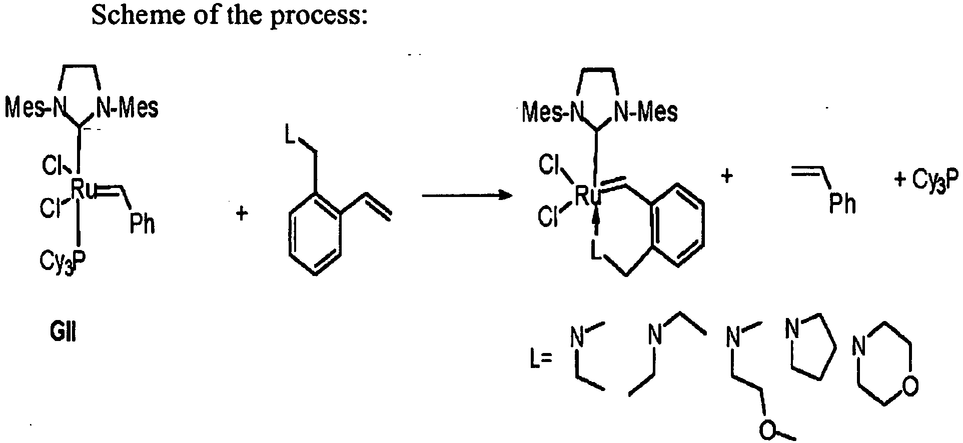

Yield of the target products is 70-98%.

Catalysts are prepared from triphenylphosphine complex of ruthenium chloride according to the following scheme: 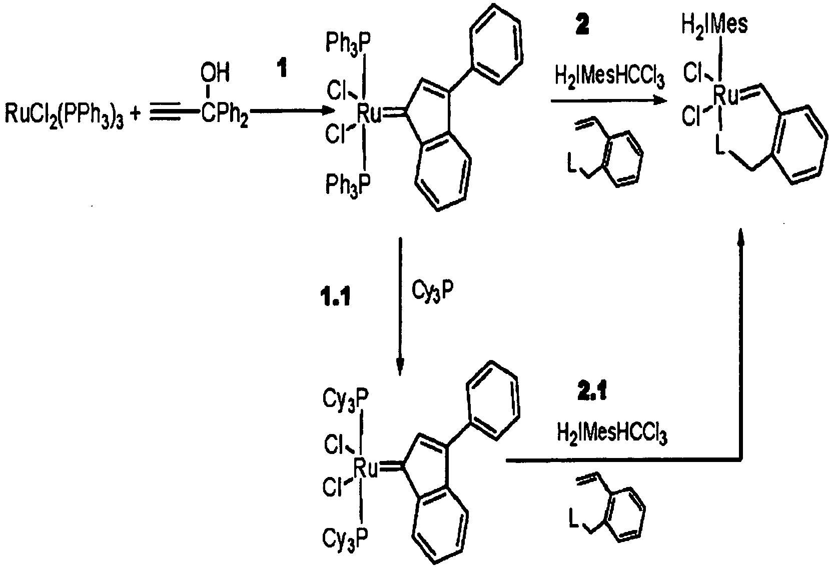 where L is a substituent selected from the group:

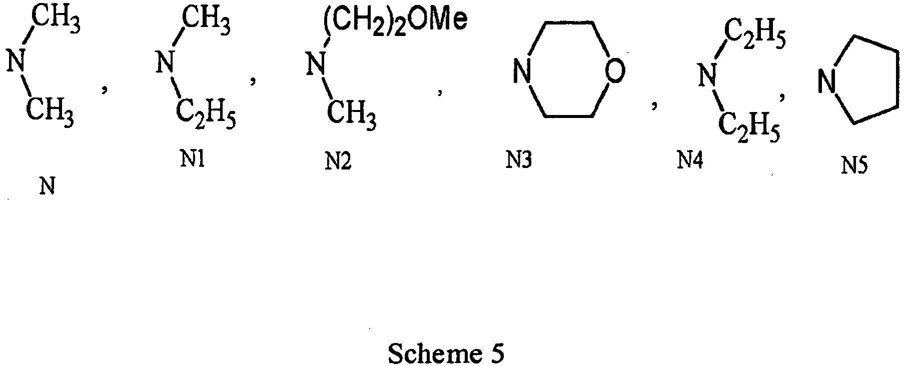

Triphenylphosphine complex of ruthenium chloride interacts with di-phenylpropynol forming indenylidene complex of ruthenium with triphenylphosphine ligands **In(1.1)**. Then **In(1.1)** is introduced into the reaction with tri-cyclohexyl-phosphine with further treatment by chloroform adduct of imidazole and aminostyrene
Stage 1 is carried out with 99% yield with boiling of RuCl₂(PPh₃)₃ with 1,1-diphenyl-2-propyn-1-ol in tetrahydrofuran.
Stage **1.1** is carried out at room temperature after stage **I**, excluding product recovery with the yield of 90-93%.
Stage **2.1** is carried out in toluene at 60-70 °C with the yield of 86-90%
Stage **2** is carried out in toluene at 60-70 °C with the yield of 40-50%

Metathesis polymerization of dicyclopentadiene is carried out with the catalyst claimed at substrate to catalyst mole ratio of 70000:1 to 200000:1. Catalyst is dissolved in DCPD at 35°C. Then the mixture obtained is heated at 50°C during 20 minutes, then at 200°C during 30 minutes

### Invention is explained with the following examples.

Synthesis of the catalyst was carried out under the conditions excluding ingress of moisture or air into the reaction system. Shlenk's techniques and reactors were used connected to vacuum system and line of dry argon. Solvents - methylene chloride, toluene, hexane, methanol - were dehydrated with standard methods and kept in inert atmosphere [Armarego, Wilfred, L.F.; Chai, Christina, L.L. (2003). Purification of Laboratory Chemicals (5th Edition). Elsevier.] 2-vinyl-N,N-alkyl-benzylamines were prepared with the known method [G/ S/ Kolesnikov, Synthesis of vinyl derivatives of aromatic and heterocyclic compounds, 1960].

### Example 1.

220 mg (0.26 mmole) of the second generation Grubbs catalyst (**GII**) were placed into 25 ml Shclenk flask. Flask was filled with argon, solution of 186 mg (0.91 mmole) of (2-metoxyethyl)methyl(2-vinylbenzyl)amine in 4 ml of absolute toluene was added. Reaction mixture was heated during 10 minutes at 85°C, then cooled and solvent was evaporated in vacuum. Residue was washed with hexane and dried in vacuum. 170 mg (98%) of catalyst **N2** were obtained in the form of green color crystals. ¹H NMR (300 MHz, CDCl₃) δH: 1,81 (3H, c), 2,19-2,58 (18H, m), 2.96-3.14 (6H, m), 3.38 (1H, m), 3.95 (1H, m), 4,04 (4H, m), 5,34 (1H, d, J 13,7 Hz), 6,58 (1H, d, J 7,3 Hz), 6,95-7.13 (6H, m), 7,46 (1H, t, J 7,3 Hz), 18.75 (1H, c).

### Example 2.

Similar to Example 1 heated at 60°C during 1 hour; obtained **N2** 163 mg (94%)

### Example 3.

200 mg (0.23 mmole) of the second generation Grubbs catalyst (**GII**) were placed into 25 ml Shclenk flask. Flask was filled with argon and 140 mg (0.78 mmole) of solution of N-methyl-N-(2-vinylbenzyl)ethylamine in 4 ml of absolute toluene is added. Reaction mixture was heated during 20 min. at 85°C, then cooled down and solvent was evaporated in vacuum. Residue was washed with methanol and dried in vacuum. Catalyst **N1** - 125 mg (83%) was obtained in the of green color crystals. ¹H NMR (300 MHz, CDCl₃) δH: 0,48 (3H, t, J 7,1 Hz), 1,64 (3H, c), 1,97 (4H, m), 2,35-2,93 (16H, m), 3,24 (1H, m), 4,03 (4H, m), 5,26 (1H, d, J 14,4 Hz), 6,55 (1H, d, J 7,2 Hz), 6,90-7.1 (6H, m), 7,41 (1H, t, J 7,2 Hz), 18.70 (1H, c).

### Example 4.

Similar to Example 3 heated at 60°C during 1 hour. Obtained **N1**, yield 127 mg (84%)

### Example 5.

220 mg (0.26 mmole) of the second generation Grubbs catalyst (**GII**) were heated in 4 ml of absolute toluene with 186 mg (0.91 mmole) of 4-(2-vinylbenzyl)morpholine during 10 minutes at 85°C. Toluene was evaporated and 5 ml of hexane was added. Residue was filtered and washed with hexane and cold methanol 4 ml. 148 mg of 86% complex **N3** were obtained. ¹H NMR (300 MHz, CDCl₃) δH: 1,56 (2H, C), 2.06 (2H, m), 2,32-2,75 (16H, m), 3.08 (2H, m), 3.25 (2H, m), 3.57 (2H, m), 4.11 (4H m), 4.15 (2H m), 6,60 (1H, d, J 7,2 Hz), 7,00 (1H d, J 8,2 Hz), 7.07 (4H, C), 7,17 (1H, t, J 7,2 Hz), 7,42 (1H, t, J 7,2 Hz),18.92 (1H, c)

### Example 6.

Similar to Example 5 heated at 60°C during 1 hour; yield of N3 145 mg (83%)

### Example 7.

170 mg (0.2 mmole) of the second generation Grubbs catalyst (**GII**) were placed into 25 ml Shclenk flask. Flask was filled with argon and 114 mg (0.6 mmole) of solution of N,N-diethyl-(2-vinylbenzyl)amine in 4 mol of dry toluene was added. Reaction mixture was heated during 2 hours (70°C), then cooled down and solvent was evaporated in vacuum. Product was recovered with silica gel preparative chromatography, by eluting with mixture cyclohexane : tetrahydrofuran = 4:1. Catalyst **N4** 115 mg (71%) was obtained in the of green color crystals.

### Example 8.

200 mg (0.23 mmole) of the second generation Grubbs catalyst (**GII**) were placed in 25 ml Shclenk flask. Flask was filled with argon and 110 mg (0.57 mmole) of solution of 1-(2- vinylbenzyl)pyrrolidine in 4 ml of absolute toluene was added. Reaction mixture was heated during 20 minutes at 70°C, then cooled down and solvent was evaporated in vacuum. Residue was washed with methanol and dried in vacuum. Catalyst **N5** 109 mg (71%) was obtained in the of green color crystals. ¹H NMR (300 MHz, CD₂Cl₂) δH: 1,27 (2H, m), 1,44 (2H, m), 2,09 (2H, m), 2,38 (12H, c), 2,47 (6H, c) 4,07 (4H, m), 4,21 (2H, m), 6,69 (1H, d, J 7,5 Hz), 6,97 (1H, d, J 7,5 Hz), 7,03 (4H, c), 7,16 (1H, t, J 7,5 Hz), 7,48 (1H, t, J 7,5 Hz) 18.79 (1H, c).

### Example 9

15 g (15.64 mmole) of RuCl₂(PPh₃)₂, 5.3 g (25.45 mmole) of 1,1-diphenyl-2-propyne-1-ol were placed into 1000 ml Shclenk flask and purged with argon. 800 ml of absolute tetrahydrofuran were added refluxed for 3 hours under argon. Mixture was evaporated by 50% in vacuum and 14 g (50.04 mmole) of tricyclohexylphosphine were added in the flow of argon, stirred for 8 hours at ambient temperature. Solvent was evaporated in vacuum and the residue was added with 400 ml of acetone, then the suspension was stored at -40°C for 10 hours. Residue was filtered and step by step washed with methanol, acetone, hexane and dried in vacuum. 15.3 g of indelindene complex of ruthenium **In (1.2)** was obtained with the yield of (14.83 mmole) (94.8%).

### Example 10.

9.23 g (10 mmole) **(In II)** 7.232 g (17 mmole) 1,3-Bis(2,4,6-trimethylphenyl)-2-(trichloromethyl)imidazolidine in 210 ml of absolute toluene were placed into 250 ml Shclenk flask; heated in inert atmosphere at 70 °C during 15 hours. Mixture was cooled and 4.036 g (25 mmole) of aminostyrene were added in the flow of argon and then heated for 3.5 hours. Mixture was cooled down and filtered, toluene was evaporated in vacuum; and the residue was suspended into 55 ml of hexane. Mixture was held at -40°C for 10 hours. Residue was filtered and washed with hexane 2X15 ml and methanol 3X15ml. After drying in vacuum 5.366 g (85.8%) of complex **N** were obtained NMR ¹H (300 MHz CD₂Cl₂) 1.75 (6H, c); 2.33 (18H, br. d); 4.01 (6H, br. c); 6.63 (1H, d, J 7.6 Hz); 6.94 m. (5H); 7.11 (1H, t, J 7.6 Hz); 7.43 (1H, t, J 7.6 Hz); 18.58 c. (1H).

### Example 11.

0.923 g (1 mmole) **In(1.2)**, 0.723 g (1.7 mmole) 1,3-Bis(2,4,6-trimethylphenyl)-2-(trichloromethyl)imidazolidine in 210 ml of absolute toluene were placed into 25 ml Shclenk flask; heated in inert atmosphere at 70°C during 15 hours. Mixture was cooled down, 0.662 g (3.5 mmole) of diethyl (2-vinylbenzyl)amine were added in the flow of argon and then heated for 6 hours. Mixture was cooled down and filtered, toluene was evaporated in vacuum; and the residue was suspended into 5.5 ml of hexane. Mixture was held at -40°C for 10 hours. Residue was filtered and washed with hexane and methanol. After drying under vacuum catalyst **N4** was obtained - 0.477 g (73%).

### Example 12.

Similar to Example 11 heated at 60°C during 15 and 6 hours. Obtained **N4** 0.424 g (64%)

### Example 13.

0.923 g (1 mmole) **In(1.2)** 0.723 g (1.7 mmole) of 1,3-Bis(2,4,6-trimethylphenyl)-2-(trichloromethyl)imidazolidine in 210 ml of absolute toluene were placed into 250 ml Shclenk flask; heated in inert atmosphere at 70°C during 15 hours. Mixture was cooled down, 0.655 g (3.5 mmole) of 1-(2-vinylbenzyl) pyrrolidine were added in the flow of argon and then heated for 6 hours. Mixture was cooled down and filtered from, toluene was evaporated in vacuum; and the residue was suspended into 5.5 ml of hexane. Mixture was held at -40°C for 10 hours. Residue was filtered and washed with hexane and methanol. After vacuum drying **N5** was obtained - 0.488 g (75%).

### Example 14.

Similar to Example 13 heated at 60°C during 15 hours. Obtained **N5** 0.437 g (67%)

### Example 15.

0.923 g (1 mmole) **In(1.2)** 0.723 g (1.7 mmole) of 1,3-Bis(2,4,6-trimethylphenyl)-2-(trichloromethyl)imidazolidine in 210 ml of absolute toluene were placed into 25 ml Shclenk flask and then heated for 15 hours. Mixture was cooled down, 0.628 g (3.5 mmole) of N-methyl-N-(2-vinylbenzyl)vinylamine were added in the flow of argon; heated in inert atmosphere during 3.5 hours. Mixture was cooled down and filtered from, toluene was evaporated in vacuum; and the residue was suspended into 5.5 ml of hexane. Mixture was held at -20°C for 10 hours. Residue was filtered and washed with hexane and methanol. After vacuum drying **N1** was obtained - 0.510 g (78%).

### Example 16.

Similar to Example 15 heated at 60°C during 15 hours. Obtained **N1** 0.503 gr (77%)

### Example 17.

0.923 g (1 mmole) **In(1.2)** 0.723 g (1.7 mmole) of 1,3-Bis(2,4,6-trimethylphenyl)-2-(trichloromethyl)imidazolidine in 210 ml of absolute toluene were placed into 25 ml Shclenk flask; heated in inert atmosphere at 70°C during 15 hours. Mixture was cooled down, 0.715 g (3.5 mmole) of (2-metoxyethyl)methyl (2-vinylbenzyl)amine were added in the flow of argon and then heated for 3.5 hours. Mixture was cooled down and filtered, toluene was evaporated in vacuum; and the residue was suspended in 5.5 ml of hexane. Mixture was held at -40°C for 10 hours. Residue was filtered and washed with hexane and methanol. After vacuum drying **N2** was obtained - 0.540 g (81%).

### Example 18.

Similar to Example 17 heated at 60°C during 15 hours. Obtained **N2** 0.542 g (81 %)

### Example 19.

0.923 g (1 mmole) **In(1.2)** 0.723 g (1.7 mmole) of 1,3-Bis(2,4,6-trimethylphenyl)-2-(trichloromethyl)imidazolidine in 210 ml of absolute toluene were placed into 25 ml Shclenk flask; heated in inert atmosphere at 70°C during 15 hours. Mixture was cooled down, 0.710 g (3.5 mmole) of 4-(2-vinylbenzyl)morpholine were added in the flow of argon and then heated for 3.5 hours. Mixture was cooled down and filtered, toluene was evaporated in vacuum; and the residue was suspended in 5.5 ml of hexane. Mixture was held at -40°C for 10 hours. Residue was filtered and washed with hexane and methanol. After vacuum drying **N3** was obtained, yield - 0.522 g (79%).

### Example 20.

Similar to Example 19 heated at 60°C during 15 hours. Obtained **N3** 0.516 g (78%)

### Example 21.

253 mg (0.26 mmole) of complex **In(2.2)** were placed into 25 ml Shclenk flask. Flask was purged with argon and solution of 170 mg (0.94 mmole) of N-methyl-N-(2-vinylbenzyl)ethylamine in 4 ml of absolute toluene was added. Reaction mixture was heated for 7 hours at 70°C, then cooled down and solvent was evaporated in vacuum. Residue was washed with methanol and dried in vacuum. **N1** - 135 mg (80%) was obtained in the form of green crystals.

### Example 22.

Similar to Example 21 heated at 60°C during 7hours. Obtained **N3**, yield 127 mg (75%)

### Example 23.

1.37 mg (0.0017 mmole) of complex «**N**» is dissolved at 35°C in 26.87 g (173 mmole) of dicyclopentadiene (DCPD) with purity of 99% (mole ratio of catalyst to DCPD = 1:100000). Mixture is heated in beaker at 50°C during 20 minutes, then at 200°C for 30 minutes. Solid transparent odorless sample of polydicyclopentadiene (PDCPD) is obtained. Glass transition temperature Tg 152°C, elasticity modulus 1.80 GPa, thermal expansivity 81.6, tensile strength at yield 52.0 MPa.

### Example 24.

1.89 mg (0.0024 mmole) of complex «**N**» is dissolved at 35°C in 26.87 g (173 mmole) of DCPD with purity of 99% (mole ratio of catalyst to DCPD = 1:70000). Mixture is heated in beaker at 50°C during 20 minutes, then at 200°C for 30 minutes. Solid transparent odorless sample of PDCPD is obtained. Glass transition temperature 161°C, elasticity modulus 1.86 GPa, thermal expansivity 45.8, tensile strength at yield 56.1 MPa.

### Example 25.

1.87 mg (0.0024 mmole) of complex «**N4**» is dissolved at 35°C in 26.87 g (173 mmole) of DCPD with purity of 99% (mole ratio of catalyst to DCPD = 1:70000). Mixture is heated in beaker at 50°C during 20 minutes, then at 200°C for 30 minutes. Solid transparent odorless sample of PDCPD is obtained. Glass transition temperature 173°C, elasticity modulus 1.68 GPa, thermal expansivity 66.0, tensile strength at yield 52.4 MPa.

### Example 26.

1.3 mg (0.0017 mmole) of complex **«N4»** is dissolved at 35°C in 26.87 g (173 mmole) of DCPD with purity of 99% (mole ratio of catalyst to DCPD = 1:100000). Mixture is heated in beaker at 50°C during 20 minutes, then at 200°C for 30 minutes. Solid transparent odorless sample of PDCPD is obtained. Glass transition temperature 153°C, elasticity modulus 1.78 GPa, thermal expansivity 86.0, tensile strength at yield 52.1 MPa.

### Example 27.

1.6 mg (0.0024 mmole) of complex «**N2**» is dissolved at 35°C in 26.87 g (173 mmole) of DCPD with purity of 99% (mole ratio of catalyst to DCPD = 1:70000). Mixture is heated in beaker at 50°C until exothermal reaction starts, then at 200°C for 30 minutes. Solid transparent odorless sample of PDCPD was obtained. Glass transition temperature 168°C, elasticity modulus 1.80 GPa, thermal expansivity 56.0, tensile strength at yield 58.5 MPa, ultimate tensile stress 43.5 MPa, relative elongation within yield range 9.1%, elongation at break 31.8%

### Example 28.

Similar to Example 27 at mole ratio of DCPD:N2 100000:1

### Example 29.

Similar to Example 27 at mole ratio of DCPD:N2 150000:1

### Example 30.

Similar to Example 27 at mole ratio of DCPD:N2 200000:1

Technical characteristics of the polymers obtained are shown in the Table below.

**Table**

| DCPD/ N2 | Tg, °C | Modulus in flexure, GPa | Thermal expansivity, µm/(m° C) | Tensile strength MPa | Ultimate tensile stress, MPa | Relative elongation within yield range, % | Elongation at break, % |
|---|---|---|---|---|---|---|---|
| 70000 :1 | 168 | 1.80 | 56 | 58.5 | 43.5 | 9.1 | 31.8 |
| 10000 0:1 | 164 | 1.91 | 85.4 | 57.0 | 43.5 | 8.9 | 99 |
| 15000 0:1 | 156 | 1.84 | 63.4 | 56.1 | 41.4 | 9.4 | 47.1 |
| 20000 0:1 | 138 | 1.81 | | | | | |

### Industrial Application

Catalyst for dicyclopentadiene ring-opening metathesis polymerization can be used in production of polydicyclopentadiene. Polymers produced are odorless; their mechanical and thermal properties correspond, and in some cases exceed, such properties of industrial materials from polydicyclopentadiene.

## Claims

1. Catalyst for dicyclopentadiene ring-opening metathesis polymerization with the formula: 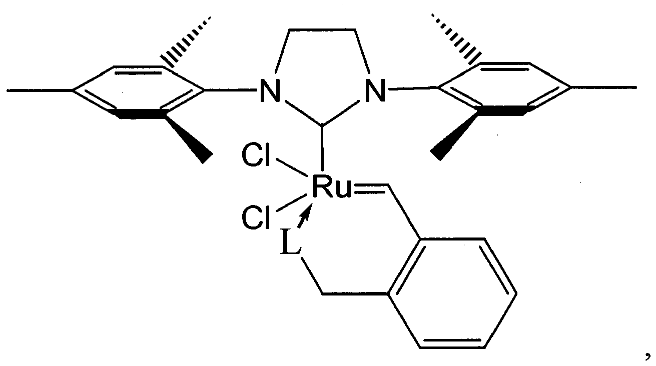 where L is a substituent selected from the group including:

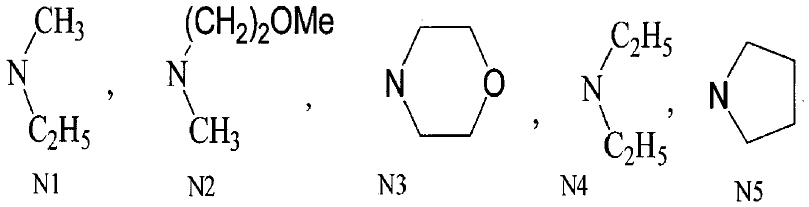

2. Method of preparing catalyst with the following formula: 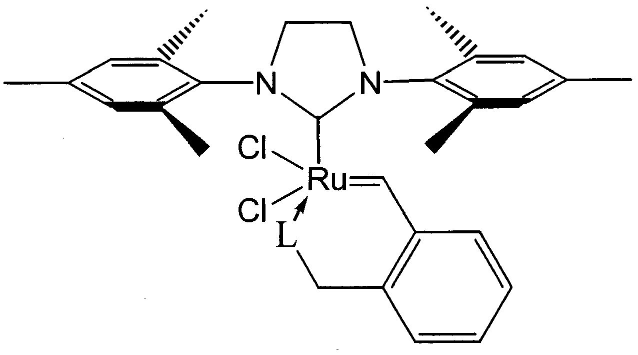 where L is a substituent selected from the group including: 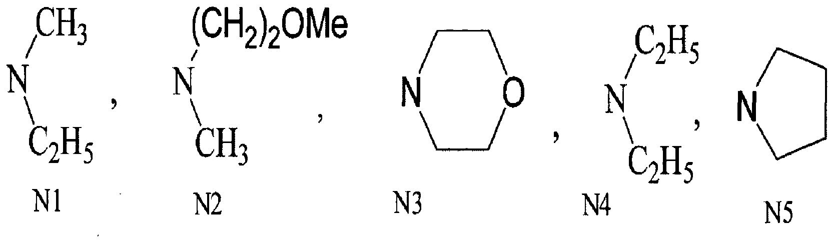 where the second generation Grubbs catalyst is subject to interaction with (N,N-dialkyl-(2-vinylbenzyl)amine or 1-(2- vinylbenzyl)pyrrolidine or 4-(2- vinylbenzyl)morpholine in inert atmosphere at temperatures of 60-85 °C in the presence of a solvent, with dialkyl- being methylethyl- or methyl(2-metoxyethyl).

3. Method of preparing catalyst with the following formula: 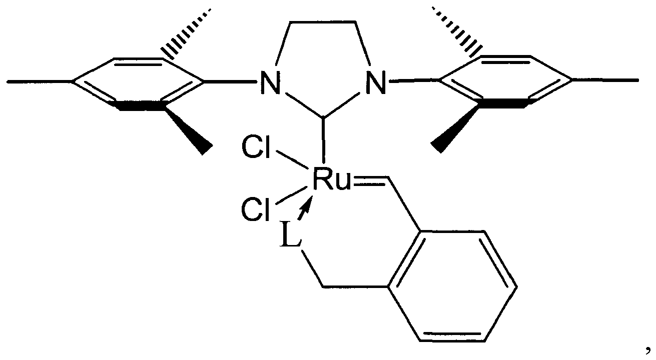 where L is a substituent selected from the group including: 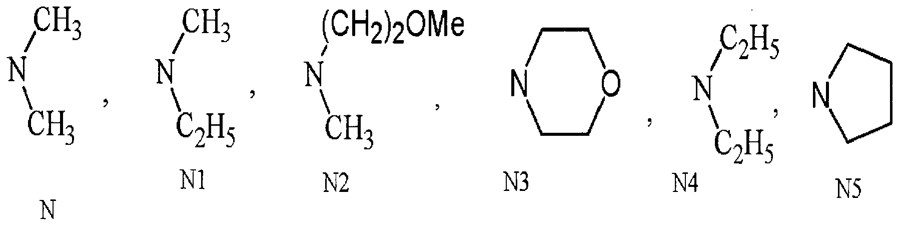 where triphenylphosphine complex of ruthenium is subject to interaction with 1,1-diphenyl-2-propyne-1-ol in tetrahydrofuran at the temperature of solvent boiling in inert atmosphere, and then with tricyclohexylphosphine at room temperature in inert atmosphere; indenylidene complex of ruthenium formed is recovered and then step by step, in one reactor, it is subject to interaction with 1,3-Bis(2,4,6-trimethylphenyl)-2-(trichloromethyl)imidazolidine and 2-(N,N-dialkylaminomethyl)styrene or 1-(2-vinylbenzyl) pyrrolidine or 4-(2- vinylbenzyl)morpholine in toluene with heating at 60-70°C in inert atmosphere, with dialkyl- being dimethyl, diethyl-, or methylethyl- or methyl(2-metoxyethyl)-.

4. Method of metathesis polymerization of dicyclopentadiene where polymerization is carried out with the catalyst of claim 1 with mole ratio of substrate to catalyst of 70000:1 to 200000:1.

## Patentansprüche

1. Katalysator für Dicyclopentadienringöffnungsmetathesepolymerisation mit der Formel: 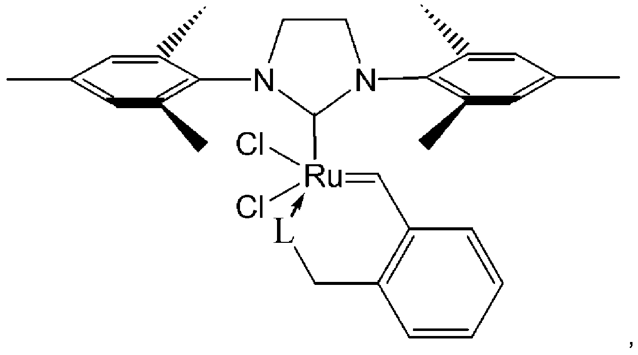 wobei L ein Substituent ist, welcher aus der Gruppe ausgewählt ist, enthaltend:

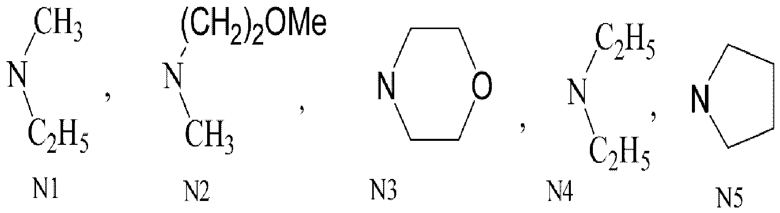

2. Verfahren zur Herstellung eines Katalysators mit der folgenden Formel: 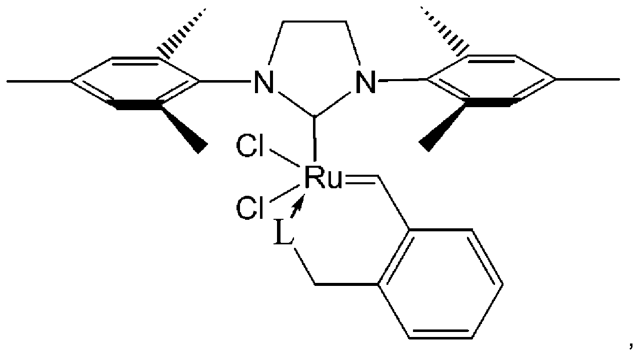 wobei L ein Substituent ist, welcher aus der Gruppe ausgewählt ist, enthaltend: 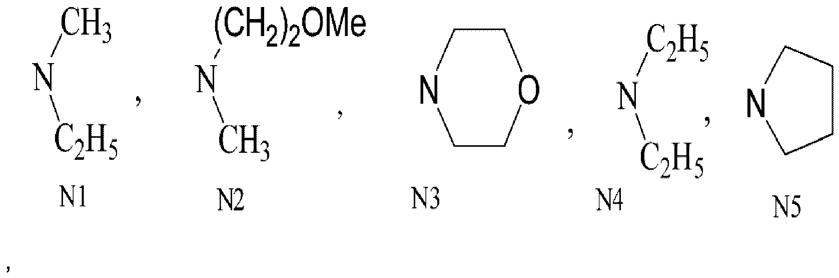 wobei der Grubbs-Katalysator der zweiten Generation einer Interaktion mit (N,N-Dialkyl-(2-Vinylbenzyl)amin oder 1-(2-Vinylbenzyl)pyrrolidin oder 4-(2-Vinylbenzyl)morpholin in einer inerten Atmosphäre bei Temperaturen von 60-85 °C in der Gegenwart eines Lösungsmittels ausgesetzt wird, wobei Dialkyl-Methylethyl- oder Methyl(2-metoxyethyl) ist.

3. Verfahren zur Herstellung eines Katalysators mit der folgenden Formel: 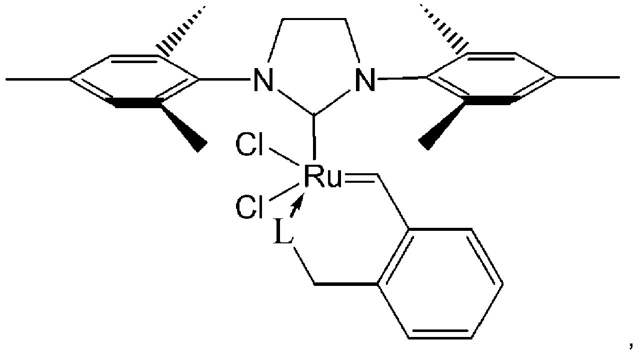 wobei L ein Substituent ist, welcher aus der Gruppe ausgewählt ist, enthaltend: 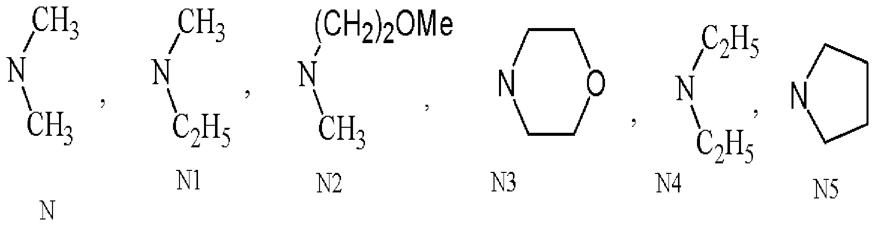 wobei ein Triphenylphosphinkomplex von Ruthenium einer Interaktion mit 1,1-Diphenyl-2-Propyn-1-OI im Tetrahydrofuran bei der Temperatur des siedenden Lösungsmittels in einer inerten Atmosphäre und dann mit Tricyclohexylphosphin bei Raumtemperatur in einer inerten Atmosphäre ausgesetzt wird; wobei ein gebildeter Indenylidenkomplex von Ruthenium rückgewonnen und er in einem Reaktor dann schrittweise einer Interaktion mit 1,3-Bis(2,4,6-Trimethylphenyl)-2-(Trichlormethyl)imidazolidin und 2-(N,N-Dialkylaminomethyl)styren oder 1-(2-Vinylbenzyl)pyrrolidin oder 4-(2-Vinylbenzyl)morpholin im Toluen mit Erwärmen bei 60-70 °C in einer inerten Atmosphäre ausgesetzt wird, wobei Dialkyl- Dimethyl, Diethyl- oder Methylethyl- oder Methyl(2-Metoxyethyl)- ist.

4. Verfahren zur Metathesepolymerisation von Dicyclopentadien, wobei die Polymerisation mit dem Katalysator nach Anspruch 1 mit einem Molverhältnis von Substrat zum Katalysator von 70000:1 bis 200000:1 durchgeführt wird.

## Revendications

1. Catalyseur pour la polymérisation à métathèse de dicyclopentadiène par ouverture de cycle avec la formule: 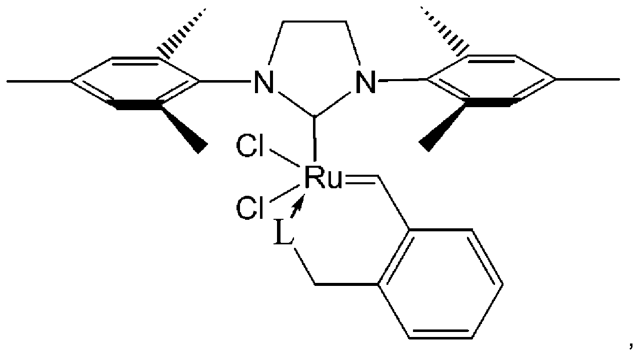 où L est un substituant choisi dans le groupe comprenant:

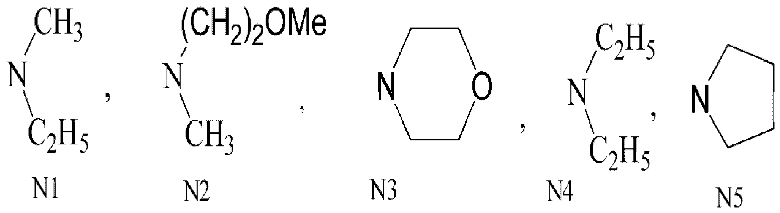

2. Procédé de préparation d'un catalyseur avec la formule suivante: 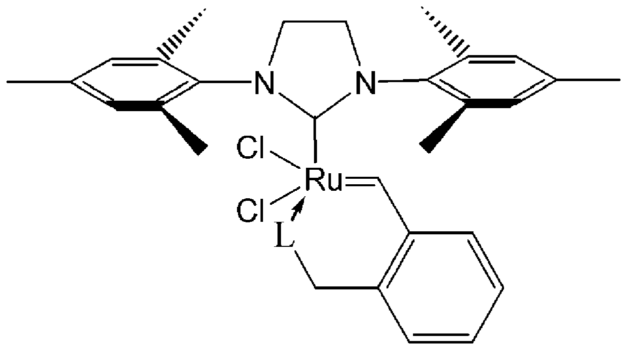 où L est un substituant choisi dans le groupe comprenant: 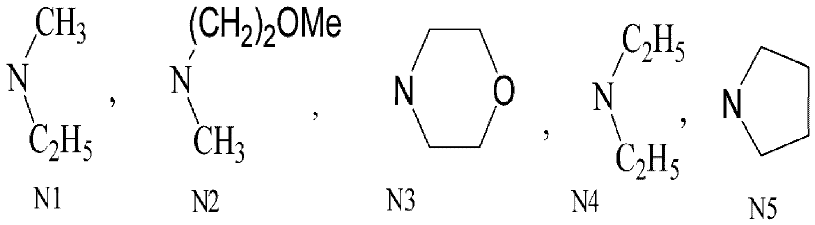 où le catalyseur de Grubbs de deuxième génération est soumis à l'interaction avec l'amine (N, N-dialkyle-(2-vinylbenzyle) ou pyrrolidine 1-(2-vinylbenzyle) ou morpholine 4-(2-vinylbenzyle) sous atmosphère inerte à des températures comprises entre 60 et 85°C en présence d'un solvant, avec dialkyle- étant méthyléthyle- ou méthyl(2-metoxyéthyle).

3. Procédé de préparation d'un catalyseur avec la formule suivante: 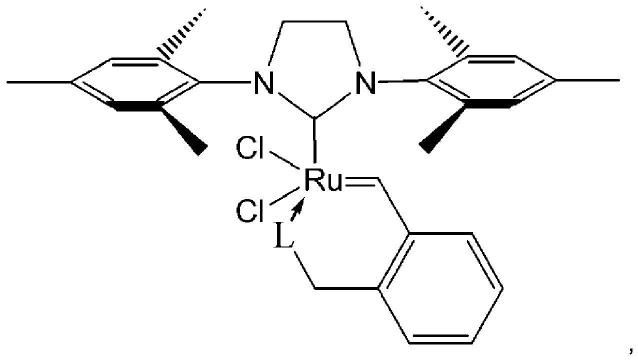 où L est un substituant choisi dans le groupe comprenant: 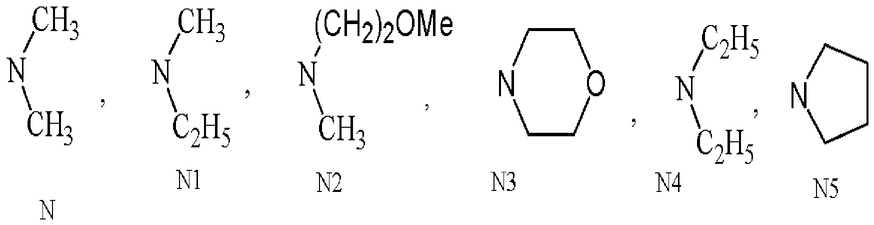 où le complexe de ruthénium de triphénylphosphine est soumis à l'interaction avec 1,1-diphényle-2-propyne-1-ol en tétrahydrofuranne à la température d'ébullition du solvant sous atmosphère inerte, puis avec tricyclohexylphosphine à la température ambiante sous atmosphère inerte; le complexe de ruthénium d'indénylidène formé est récupéré puis, étape par étape, dans un réacteur, il est soumis à l'interaction avec l'imidazolidine-1,3-bis(2,4,6-triméthylphényle)-2-(trichlorométhyle)- et le styrène-2-(N,N-dialkylaminométhyle) ou la pyrrolidine-1-(2-vinylbenzyle) ou la morpholine-4-(2-vinylbenzyle) en toluène avec chauffage à 60-70°C sous atmosphère inerte, avec dialkyle- étant diméthyle-, diéthyle-, ou méthyléthyle- ou méthyle(2-metoxyethyl)-.

4. Procédé de polymérisation à métathèse de dicyclopentadiène, où la polymérisation est effectuée avec le catalyseur selon la revendication 1 avec un rapport molaire du substrat au catalyseur de 70000:1 à 200000:1.
